# EUROPÄISCHE PATENTSCHRIFT

(11) **EP 1 845 236 B1**
(45) Veröffentlichungstag und Bekanntmachung des Hinweises auf die Patenterteilung: **13.10.2010**
(21) Anmeldenummer: 07090068.3
(22) Anmeldetag: 29.03.2007
(51) Int. Cl.: F01D 11/00, F01D 9/02, F02C 7/28

(54) **Klappendichtung für eine Strömungsmaschine**
Flap gasket for a turbo engine
Joint à clapet pour turbomachine

(30) Priorität: 11.04.2006 DE 102006017377
(43) Veröffentlichungstag der Anmeldung: 17.10.2007
(73) Patentinhaber: Rolls-Royce Deutschland Ltd & Co KG, 15827 Blankenfelde-Mahlow (DE)
(72) Erfinder: Wunderlich, Thomas, 15834 Rangsdorf (DE); Vogt, Hans-Frieder, 15834 Rangsdorf (DE)
(74) Vertreter: Wablat, Wolfgang

(56) Entgegenhaltungen:
- EP-A- 1 156 188
- US-B1- 6 347 508
- US-B1- 6 431 555

## Beschreibung

Die Erfindung betrifft eine Klappendichtung für eine Strömungsmaschine, insbesondere ein Gasturbinentriebwerk, zur Abdichtung des zwischen einem ersten und einem zweiten Bauteil bestehenden Spaltes gemäß dem Oberbegriff des Patentanspruches 1.

Klappendichtungen werden beispielsweise bei Gasturbinentriebwerken zur Abdichtung des rotationssymmetrisch ausgebildeten Brennkammer gegenüber einem aus einer Mehrzahl rotationssymmetrisch angeordneter Leitschaufelsegmente bestehenden Leitschaufelkranz eingesetzt, um Bereiche unterschiedlich hohen Druckes bzw. unterschiedliche Luftsysteme gegeneinander abzudichten. Die Klappendichtung umfasst eine Mehrzahl von an einem Niet beweglich gehaltenen Dichtungsklappen, deren Seitenfläche aufgrund des auf einer Seite herrschenden höheren Druckes sowohl an eine von dem rotationssymmetrischen Bauteil gebildete Dichtkante als auch an eine Dichtkante des jeweiligen Bauteilsegments gelegt bzw. gedrückt wird. Konstruktiv oder thermisch bedingte Unterschiede in der Spaltgröße zwischen dem rotationssymmetrischen Bauteil und dem betreffenden Bauteilsegment können daher ausgeglichen werden.

Eine optimale Dichtwirkung wird erreicht, wenn die beiderseitigen Dichtkanten im Betriebszustand so zueinander positioniert sind, dass sich die Klappe in einer senkrechten Lage befindet. Da diese Position aufgrund von Toleranzen und Wärmedehnungen im Allgemeinen nicht gewährleistet ist, kommt es zu einer Schräglage der Klappe und damit verbundenen Leckageverlusten, da die Klappen nicht in einer Linie, sondern jeweils nur noch punktförmig an den kreisbogenförmig verlaufenden Dichtkanten des rotationssymmetrischen Bauteils und der Bauteilsegmente anliegen. Diesem Nachteil der bekannten Klappendichtungen wird dadurch begegnet, dass die Dichtkanten keinen kreisbogenförmigen, sondern einen geraden Verlauf haben, das heißt, keinen Kreisbogen, sondern eine Sehne bilden. Diese Art der Dichtkantenausbildung, bei der die Klappen über gerade Kanten kippen und somit über den gesamten Toleranz- und Verschiebungsbereich an den Dichtkanten eine sichere Abdichtung gewährleisten, erfordert jedoch einen erhöhten radialen Bauraum für die Dichtungskonfiguration.

Da die einzelnen Klappen über in diesen ausgebildete Haltebohrungen an radial zwischen den beiden Dichtkanten positionierten Nieten oder Haltebolzen kippbar gehalten sind und der Bohrungsdurchmesser zur Gewährleistung des Kippvorgangs größer als der Bolzendurchmesser ist, kommt es zu nachteiligen Leckageverlusten über den zwischen dem Bolzen und der Bohrung bestehenden Spalt, das heißt, Druckverlusten bzw. Kühlluftverlusten in dem unter höherem Druck stehenden Sekundärluftbereich.

Eine Klappendichtung der gattungsgemäßen Art ist aus der US 6,347,508 B1 vorbekannt. Bei dieser trennt eine einzelne Klappe einen Bereich für Kühlluft von hohem Druck von einem Bereich (Brennkammer) mit niederem Druck. Nachteilig hierbei ist die fehlende freie Beweglichkeit der einzelnen Klappe, die radial außen an der ringförmigen Dichtlippe des ersten Bauteils anliegt und radial innen auf Bolzen geführt ist. Hierdurch besteht die Gefahr des Auftretens von Druckverlusten bzw. von Kühlluftverlusten in dem unter höherem Druck stehenden Sekundärluftbereich. Der Erfindung liegt die Aufgabe zugrunde, zur Reduzierung von Kühlluftleckagen in einem Triebwerk eine Klappendichtung mit verbesserter Dichtwirkung anzugeben.

Erfindungsgemäß wird die Aufgabe mit einer gemäß den kennzeichnenden Merkmalen des Patentanspruchs 1 ausgeführten Klappendichtung gelöst. Zweckmäßige Ausgestaltungen der Erfindung sind Gegenstand der Unteransprüche.

Durch die Kombination der Merkmale wird eine Klappendichtung geschaffen, deren einzelne Dichtungsklappen der mehreren Segmente des zweiten Bauteils frei beweglich sind und somit unter der Wirkung der Druckkraft an den voneinander beabstandeten ersten und zweiten Dichtkanten gut anliegen und damit den Dichtspalt gut abdichten können. Die Klappendichtung gewährleistet die freie Kippbewegung der einzelnen Dichtungsklappen an den mehreren Segmenten des zweiten Bauteils.

Bei einem Gasturbinentriebwerk wird der zwischen einem rotationssymmetrischen Bauteil und einer aus rotationssymmetrisch angeordneten Segmenten gebildeten Baugruppe bestehende Spalt mittels mehrerer, über Haltebohrungen an Haltebolzen kippbar gehaltener Dichtungsklappen, die Bereiche unterschiedlichen Druckes trennen und an voneinander beabstandeten Dichtkanten unter der Wirkung einer Druckkraft anliegen, abgedichtet. Dabei werden der Abstand zwischen den Dichtkanten verringert und die Haltebolzen und Haltebohrungen in einem Bereich außerhalb der nunmehr verkleinerten Druckfläche angeordnet, wobei die eingeschränkte Größe der Druckfläche der Erzielung der erforderlichen Druckkraft genügt. Über den zwischen dem Haltebolzen und der Haltebohrung zur Gewährleistung der Kippbewegung erforderlichen Spalt kann keine Kühlluft in den Bereich geringeren Druckes gelangen, so dass aufgrund verminderter Kühlluftverluste ein robustes Sekundärluftsystem zur Verfügung steht.

Die Dichtkanten sind an ersten und zweiten Stegen des ersten Bauteils und den Segmenten des zweiten Bauteils ausgebildet. Die Haltebolzen sind an einem der Stege befestigt, wobei der zur Befestigung vorgesehene Steg in radialer Richtung zu dem anderen Steg hin verlängert ist und somit der Abstand zwischen den Dichtkanten und letztlich die Druckfläche, auf welche die Druckkraft zum abdichtenden Anlegen der Dichtungsklappe ausgeübt wird, verringert wird.

Die Dichtkanten sind in dem rotationssymmetrischen System vorzugsweise als Geraden ausgebildet, um die Dichtwirkung weiter zu verbessern.

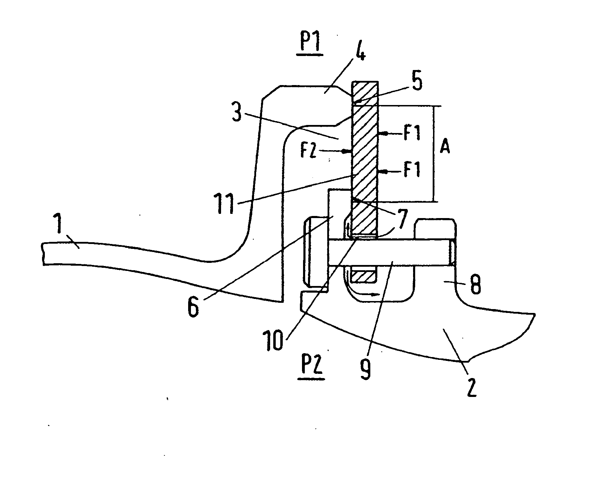

Ein Ausführungsbeispiel der Erfindung wird anhand der Zeichnung, in deren einziger Figur in einem Längsschnitt eine Klappendichtung zwischen einem rotationssymmetrischen ersten Bauteil, beispielsweise einer Brennkammer, und einem aus einzelnen rotationssymmetrisch angeordneten Segmenten gebildeten zweiten Bauteil, hier einem aus einzelnen Leitschaufelsegmenten gebildeten Leitschaufelkranz für ein Gasturbinentriebwerk, dargestellt ist, näher erläutert.

Der Spalt 3 zwischen dem rotationssymmetrischen ersten Bauteil 1 und den diesem zugeordneten - rotationssymmetrisch angeordneten - Segmenten des zweiten Bauteils 2 wird durch eine segmentierte Klappendichtung abgedichtet. Die freie Stirnseite eines an das rotationssymmetrische erste Bauteil 1 angeformten umlaufenden ersten Steges 4 bildet eine umlaufende erste Dichtkante 5. An einem von jedem Segment des zweiten Bauteils 2 zum umlaufenden Steg 4 hin abstrebenden zweiten Steg 6 befindet sich am oberen Ende eine zweite Dichtkante 7. Im unteren Abschnitt des zweiten Steges 6 sowie in einem im Abstand von diesem angeordneten Befestigungssteg 8 ist ein Haltebolzen 9 befestigt, an dem mittels einer Haltebohrung 10 eine Dichtungsklappe 11 kippbar gehalten ist. Die Dichtungsklappe 11 dichtet zur Vermeidung von Kühlluftverlusten einen Bereich höheren Druckes P1 gegen einen Bereich niedrigeren Druckes P2 ab.

Um das Kippen der Dichtungsklappe 11 zu ermöglichen und somit durch Toleranzen und Wärmedehnungen bedingte Spaltweitenänderungen oder -unterschiede auszugleichen und damit die Dichtwirkung zu verbessern, ist der Durchmesser der Haltebohrung 10 größer als der des Haltebolzens 9.

Die Seitenfläche der Dichtungsklappe 11 liegt im oberen Bereich an der ersten Dichtkante 5 und im mittleren Bereich an der zweiten Dichtkante 7 an. Durch die Anordnung der zweiten Dichtkante 7 im mittleren Bereich der Dichtungsklappe 11 und oberhalb der Haltebohrung 10 wird ein Übertreten von Kühlluft aus dem Bereich höheren Druckes P1 über die Haltebohrung 10 in den Bereich niedrigeren Druckes P2 durch die zweite Dichtkante 7 verhindert. Die auf die verringerte Druckfläche A zwischen den beiden Dichtkanten 5 und 7 wirkende Druckkraft F1 bzw. der Unterschied zwischen den auf beiden Seiten der Dichtungsklappe 11 wirkenden Druckkräften F1 und F2 ist noch ausreichend groß, um die Abdichtung an den Dichtkanten 5 und 7, die vorzugsweise als Geraden ausgeführt sind, zu gewährleisten.

### Bezugszeichenliste

- 1: erstes Bauteil
- 2: zweites Bauteil (Segmente)
- 3: Spalt
- 4: erster Steg
- 5: erste Dichtkante
- 6: zweiter Steg
- 7: zweite Dichtkante
- 8: Befestigungssteg
- 9: Haltebolzen
- 10: Haltebohrung
- 11: Dichtungsklappe
- P1: Bereich höheren Druckes
- P2: Bereich niedrigeren Druckes
- A: Druckfläche
- F1, F2: Druckkraft

## Patentansprüche

1. Klappendichtung für eine Strömungsmaschine, insbesondere ein Gasturbinentriebwerk, zur Abdichtung des zwischen einem ersten und einem zweiten rotationssymmetrischen Bauteil (1, 2) bestehenden Spaltes (3) mittels mindestens einer an einem der Bauteile (1, 2) über Haltebohrungen (10) an Haltebolzen (9) kippbar gehaltenen Dichtungsklappe (11), die Bereiche unterschiedlichen Druckes (P1 > P2) trennt, an voneinander beabstandeten Dichtkanten (5, 7) der beiden Bauteile (1, 2) anliegt und unter der Wirkung einer auf die Druckfläche (A) zwischen den beiden Dichtkanten (5, 7) wirkenden Druckkraft (F1) steht, wobei die Haltebolzen (9) und Haltebohrungen (10) außerhalb der Druckfläche (A) angeordnet sind, **dadurch gekennzeichnet, dass** die Dichtkanten (5, 7) einen geraden Verlauf haben und jeweils eine Sehne des rotationssymmetrischen ersten und zweiten Bauteils (1, 2) bilden, die Dichtungsklappe (11) frei beweglich ist, eine freie Kippbewegung der Dichtungsklappe (11) gewährleistet ist und der Durchmesser der Haltebohrungen (10) zur Gewährleistung des Kippvorgangs größer ist als der Durchmesser der Haltebolzen (9).

2. Klappendichtung nach Anspruch 1, **dadurch gekennzeichnet, dass** die erste Dichtkante (5) an einem umlaufenden ersten Steg (4) des ersten Bauteils (1) und die zweiten Dichtkanten (7) an am äußeren Ende eines jedes Segments des zweiten Bauteils (2) zum umlaufenden ersten Steg (4) hin abstrebenden zweiten Stegen (6) ausgebildet sind.

3. Klappendichtung nach Anspruch 1 oder 2, **dadurch gekennzeichnet, dass** die Haltebolzen (9) iminneren Abschnitt der zweiten Stege (6) der Segmente des zweiten Bauteils (2) befestigt und die zur Befestigung vorgesehenen zweiten Stege (6) zum ersten Steg (4) des ersten Bauteils (1) hin verlängert sind.

4. Klappendichtung nach einem der Ansprüche 1 bis 3, **dadurch gekennzeichnet, dass** die Haltebolzen (9) zusätzlich an in einem Abstand vom jeweiligen zweiten Steg (6) angeordneten Befestigungsstegen (8) gehalten sind.

## Claims

1. Door seal for a fluid-flow machine, more particularly a gas-turbine engine, used for sealing the gap (3) between a first and a second axially symmetrical component (1, 2) by means at least one seal door (11) which is tiltably held at retaining bolts (9) via retaining holes (10) on one of the components (1, 2), and which separates zones of different pressure (P1 > P2), lodges against sealing edges (5, 7) of the two components, with the sealing edges (5, 7) being disposed at a certain distance from each other, and which is subjected to a pressure force (F1) acting upon the pressure surface (A) between the two sealing edges (5, 7), with the retaining bolts (9) and the retaining holes (10) being arranged outside of the pressure surface (A), **characterized in that** the sealing edges (5, 7) are given a linear course and respectively form a chord of the axially symmetrical first and second component (1, 2), that the seal door (11) is freely movable, that a free tilting movement of the seal door (11) is guaranteed and that the diameter of the retaining holes (10) is larger than the diameter of the retaining bolts (9) in order to enable the tilting procedure.

2. Door seal in accordance with Claim 1, **characterized in that** the first sealing edge (5) is provided at a circumferential first web (4) of the first component (1) and that the second sealing edges (7) are provided at second webs (6) extending in the direction of the circumferential first web (4) at the outer end of each segment of the second component (2).

3. Door seal in accordance with Claim 1 or 2, **characterized in that** the retaining bolts (9) are attached at the inner portion of the second webs (6) of the segments of the second component (2) and that the second webs (6) provided for attachment are lengthened towards the first web (4) of the first component (1).

4. Door seal in accordance with one of the Claims 1 to 3, **characterized in that** the retaining bolts (9) are additionally held at locating webs (8) arranged at a certain distance from the respective second web (6).

## Revendications

1. Joint à clapet pour une machine à écoulement, en particulier pour un moteur à turbine à gaz, destiné à étanchéifier l'interstice (3) existant entre un premier et un second composants à symétrie axiale (1, 2), et ce au moyen d'au moins un clapet d'étanchéité (11) maintenu de manière basculante à l'un des composants (1, 2) par des boulons de fixation (9) à l'aide de perçages de fixation (10), et qui sépare des zones de pressions différentes (P1 > P2), s'appuie sur des bords d'étanchéité (5, 7) des deux composants (1, 2) distants l'un de l'autre, et est soumis à l'effet d'une force de pression (F1) agissant sur la surface de pression (A) entre les deux bords d'étanchéité (5, 7), sachant que les boulons de fixation (9) et les perçages de fixation (10) sont disposés hors de la surface de pression (A), **caractérisé en ce que** les bords d'étanchéité (5, 7) sont rectilignes et forment respectivement une corde du premier et du second composants à symétrie axiale (1, 2), que le clapet d'étanchéité (11) est librement mobile, qu'un mouvement de basculement libre du clapet d'étanchéité (11) est assuré et que le diamètre des perçages de fixation (10) est supérieur au diamètre des boulons de fixation (9) afin de garantir le basculement.

2. Joint à clapet selon la revendication n° 1, **caractérisé en ce que** le premier bord d'étanchéité (5) est formé sur une première nervure (4) circonférentielle du premier composant (1) et les seconds bords d'étanchéité (7) sont formés sur des secondes nervures (6) s'étendant en direction de la première nervure (4) circonférentielle à l'extrémité extérieure de chaque segment du second composant (2).

3. Joint à clapet selon la revendication n° 1 ou n° 2, **caractérisé en ce que** les boulons de fixation (9) sont fixés dans la section intérieure des secondes nervures (6) des segments du second composant (2), et les secondes nervures (6) prévues pour la fixation sont prolongées en direction de la première nervure (4) du premier composant (1).

4. Joint à clapet selon une des revendications n° 1 à n° 3, **caractérisé en ce que** les boulons de fixation (9) sont en outre maintenus par des nervures de fixation (8) situées à une certaine distance de chaque seconde nervure (6).
